(19) **Europäisches Patentamt / European Patent Office / Office européen des brevets**

(11) **EP 3 201 842 B1**

(12) **FASCICULE DE BREVET EUROPEEN**

(45) Date de publication et mention
de la délivrance du brevet:
**07.06.2023 Bulletin 2023/23**

(21) Numéro de dépôt: **15787257.3**

(22) Date de dépôt: **29.09.2015**

(51) Classification Internationale des Brevets (IPC):
**G06K 19/077** *(2006.01)*

(52) Classification Coopérative des Brevets (CPC):
**G06K 19/07754**

(86) Numéro de dépôt international:
**PCT/FR2015/052586**

(87) Numéro de publication internationale:
**WO 2016/051065 (07.04.2016 Gazette 2016/14)**

(54) **DOCUMENT ÉLECTRONIQUE À EXTRÉMITÉS D'ANTENNE INCLINÉES, SUPPORT D'ANTENNE POUR UN TEL DOCUMENT ÉLECTRONIQUE ET PROCÉDÉ DE FABRICATION D'UN TEL DOCUMENT**

ELEKTRONISCHES DOKUMENT MIT ABGEWINKELTEN ANTENNENENDEN, ANTENNENHALTER FÜR SOLCH EIN ELEKTRONISCHES DOKUMENT SOWIE VERFAHREN ZUR HERSTELLUNG SOLCH EINES DOKUMENTS

ELECTRONIC DOCUMENT HAVING ANGLED ANTENNA ENDS, ANTENNA HOLDER FOR SUCH AN ELECTRONIC DOCUMENT AND METHOD FOR MANUFACTURING SUCH A DOCUMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.09.2014 FR 1459311**

(43) Date de publication de la demande:
**09.08.2017 Bulletin 2017/32**

(73) Titulaire: **IDEMIA France
92700 Colombes (FR)**

(72) Inventeurs:
• **GRAGNIC, Elodie
92700 Colombes (FR)**
• **BOSQUET, Olivier
92700 Colombes (FR)**

(74) Mandataire: **Idemia
2, place Samuel de Champlain
92400 Courbevoie (FR)**

(56) Documents cités:
| | |
|---|---|
| **EP-A1- 2 711 873** | **EP-A1- 2 775 426** |
| **DE-A1-102012 211 546** | **FR-A1- 2 769 390** |

EP 3 201 842 B1

# Description

L'invention concerne des documents électroniques tels que des cartes à puce ou documents d'identités.

Plus particulièrement l'invention concerne un document électronique comportant un corps comprenant une cavité ouverte sur une des faces du corps et délimitée par des parois, le corps comportant en outre une antenne comportant au moins une spire entre deux extrémités qui débouchent dans la cavité, un module comportant un microprocesseur et au moins deux bornes de connexion dédiées à l'antenne et reliées électroniquement d'une part au microprocesseur et d'autre part aux extrémités de l'antenne par des moyens de connexion électrique.

Il est connu de l'art antérieur des documents électroniques tels qu'une carte à microcircuit comportant une antenne pour communiquer à distance avec un terminal. Ces documents électroniques comportent des supports d'antennes appelés plus communément inlay et qui sont traditionnellement fabriqués selon un procédé par ultrason tel que décrit dans les documents US6 233 818 et EP0 880 754. Ce procédé consiste à étendre un fil métallique conducteur sur un substrat au moyen d'un outil, tel qu'une sonotrode, se déplaçant au-dessus du substrat et distribuant le fil. Le fil est incrusté dans le substrat au moyen de vibrations à ultrason transmises depuis l'outil au fil. Les vibrations sont transmises perpendiculairement au substrat pour incruster le fil dans l'épaisseur du substrat. De préférence, le fil est entouré d'une gaine isolante qui est chauffée pendant un intervalle de temps très court, ce qui améliore l'adhérence de la gaine entourant le fil dans le substrat.

L'outil est commandé depuis un moyen de contrôle permettant de définir la trajectoire de dépose du fil. Il est ainsi possible d'enrouler les extrémités du fil en plusieurs spires et/ou de le déposer sous des formes diverses, telle qu'un zigzag ou un lacet. On entend par zigzag ou lacet, une ligne sinueuse présentant des courbes dirigées alternativement et en sens contraire. Plus particulièrement une forme en zigzag comporte alternativement des portions rectilignes et des détours.

Ces extrémités sont destinées à être électriquement connectées à un microcircuit monté dans la carte pour permettre un fonctionnement de la carte sans contact avec un lecteur distant. A cet effet l'inlay est pris en sandwich entre diverses couches de plastique et assemblé à ces couches par un procédé de lamination. Puis une cavité est usinée pour mettre à nu les extrémités de l'antenne qui seront connectées électriquement au microcircuit.

La cavité est adaptée à recevoir un module portant le microprocesseur contenant l'information du porteur de carte et éventuellement capable de traiter d'autres informations. La cavité présente un lamage supérieur sur lequel le module est en appui et un lamage inférieur recevant le microcircuit encapsulé dans une résine. Les extrémités de l'antenne sont exposées sur le lamage supérieur. Afin d'obtenir la plus grande surface de connexion, les extrémités de l'antenne sont déposées sur le substrat de sorte que chaque extrémité du fil d'antenne s'étend jusqu'au bord supérieur du lamage inférieur après usinage.

Toutefois il a été constaté que lorsque la position du fil formant les extrémités de l'antenne coïncide avec le bord supérieur du lamage inférieur, le fil initialement noyé dans le corps de carte, n'est plus correctement maintenu après usinage. En effet le fil est usiné tout d'abord selon un plan vertical lorsque la fraise réalise le lamage inférieur puis dans un plan horizontal lorsque la fraise réalise le lamage supérieur. Après les étapes d'usinage, la portion du fil la plus éloignée de la spire d'antenne est alors disposée tangente au bord supérieure du lamage inférieur.

De ce fait, la portion du fil usinée selon les deux directions présente un risque important d'être délogée du substrat sur lequel elle était initialement incrustée. Lorsque cette portion de fil est démise, elle se positionne alors de manière aléatoire dans la cavité ou bien sur la zone de connexion du module avec l'antenne. Ces deux situations engendrent un risque de dysfonctionnement du document électronique. En effet, lorsque la portion de fil détachée est située dans la cavité, elle peut venir en contact avec des portions conductrices situées sur la face interne du module, telles que des amenées de courant, créant ainsi un risque non négligeable de court circuit. De même lorsque la portion de fil démise se retrouve sur la zone de contact entre les extrémités de l'antenne et les bornes de connexion reliés au microprocesseur, il en résulte une surépaisseur et une zone de contact réduite.

Le document D1 (EP 2 775 426 A1) décrit une carte à puce ayant deux matrices de lecture écriture.

Le document D2 (DE 10 2012 221 546) décrit une carte à puce comportant des points de connexion pâteux ou liquide à température ambiante.

Le document D3 (FR 2 769 390) décrit une carte à puce apte à assurer un fonctionnement à contact et sans contact.

Le document D4 (EP 2 711 873) décrit un procédé de fabrication d'une carte à puce par détonation.

Il a donc été cherché une solution pour éviter les inconvénients cités ci-dessus. Notamment, il a été cherché une solution permettant de garantir la plus grande surface de connexion entre les extrémités de l'antenne et le module tout en garantissant le bon maintien de toutes les portions rectilignes.

A cet effet, l'invention propose un document électronique selon la revendication 1, dans lequel les extrémités de l'antenne s'étendent sensiblement dans le plan du gradin, et dans lequel les extrémités de l'antenne sont agencées en forme de zigzag et en ce qu'elles sont formées d'au moins deux portions rectilignes qui sont reliées entre elles par un détour et dont la portion rectiligne aboutissant dans le lamage inférieur est inclinée par rapport au bord supérieur du lamage inférieur.

Grâce à ces dispositions, les extrémités de l'antenne s'étendent, dans le lamage supérieur, jusqu'au bord du lamage inférieur. La portion rectiligne débouchant dans la cavité est inclinée par rapport à la paroi sur laquelle elle aboutit et n'est donc pas découpée sur toute sa longueur. Ainsi le fil de la portion rectiligne est incliné par rapport au plan de découpe de la cavité et cela permet d'assurer une découpe de biais du fil et d'empêcher une découpe parallèlement à sa longueur. Les dimensions de la section découpée du fil disposé en biais sont inférieures à celle d'un fil disposé parallèle. Ces dispositions assurent qu'une majeure portion de la portion rectiligne débouchant dans la cavité reste enrobée dans le corps de carte. Il en résulte un meilleur maintien du fil de la portion rectiligne débouchant dans la cavité et correspondant à la portion la plus éloignée de la spire d'antenne.

Selon d'autres caractéristiques :

- les portions rectilignes d'une extrémité sont agencées sensiblement parallèles entre elles dans un même plan incliné par rapport à la paroi ;
- le module comporte une plaque à circuit imprimé qui présente une face interne sur laquelle est montée le microprocesseur, et une face externe qui comporte des surfaces de contact métallisées connectées électriquement au microcircuit et qui sont destinés à venir en contact avec des broches d'un lecteur externe ;
- les détours sont incrustés plus profondément que les portions rectilignes dans l'épaisseur du corps ;
- les extrémités de l'antenne s'étendent sur une largeur au moins égale à celle du lamage supérieur;
- les extrémités de l'antenne sont agencées en regard l'une de l'autre de part et d'autre du lamage inférieur ;
- l'inclinaison de ladite au moins une portion rectiligne est de 1 à 10° de préférence 6° par rapport au bord supérieur dans le plan du gradin.
- les moyens de connexion électrique sont formés d'une bande d'un adhésif conducteur déposé au moins sur chacune des extrémités de l'antenne ;
- l'adhésif est un adhésif anisotropique conducteur qui est déposé sur le gradin bordant le lamage inférieur.

La présente invention sera mieux comprise à la lecture de la description qui suit faite en référence aux figures annexées dans lesquelles :

- La figure 1 est une vue en perspective éclatée d'une carte selon l'invention ;
- La figure 2 est une vue d'un substrat supportant l'antenne et destiné à être incorporé dans une carte à puce selon l'invention ;
- La figure 3 est une vue de détails de la cavité dans laquelle débouchent les extrémités de l'antenne ;
- La figure 4 est une vue de détails de la figure 3.

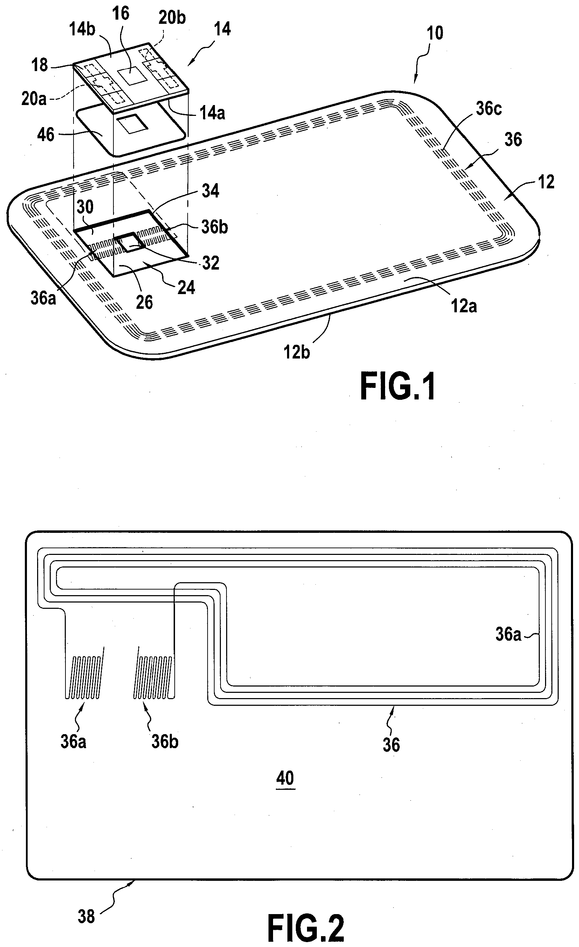

Une carte 10 à microcircuit illustrée à la figure 1 comprend un corps 12 en plastique délimité entre une face avant 12a et une face arrière 12b s'étendant sensiblement dans un plan horizontal. Ce corps 12 est une plaque de plastique mince. Les dimensions des cartes sont spécifiées dans les normes ISO7810 et ISO7816 et présentent les valeurs suivantes : 85mm*54mm*0,76mm. L'épaisseur, selon la direction verticale, est négligeable par rapport à ses dimensions en largeur et en longueur.

Un tel corps 12 est réalisé par tout procédé. Un procédé classique est un laminage à chaud de couches plastiques. Les couches ont des fonctions diverses. Ainsi une couche interne centrale ou substrat peut être une couche de structure conférant au corps 12 et à la carte 10 sa rigidité ou servir de support à un composant électronique. Des couches intermédiaires, de part et d'autre du substrat, peuvent comprendre des inscriptions ou décors à fonction informative ou décorative. Des couches externes, avantageusement transparentes, terminent typiquement l'empilage et réalisent en surface une protection des couches plus internes.

La carte 10 comporte en outre un module 14 à microcircuit, formé d'une plaque à circuit imprimé de fine épaisseur. La plaque à circuit imprimé présente une face interne 14a sur laquelle est montée une puce 16, ou microprocesseur. La face externe 14b de la plaque à circuit imprimé comporte des surfaces de contact métallisées 18 reliées d'une part au microcircuit et destinés à venir en contact avec des broches d'un lecteur externe d'autre part. Les surfaces de contact métallisées 18 permettent ainsi à la carte 10 de communiquer avec un terminal externe par contact physique.

Dans le corps 12 de la carte 10 est réalisée une cavité 24 ouverte et débouchante sur la face avant 12a de la carte 10. La carte 10 reçoit le module 14 à microcircuit. Cette cavité est délimitée par des parois qui s'étendent perpendiculairement ou sensiblement inclinées par rapport aux faces 12a, 12b du corps de carte. Selon un mode de réalisation préféré illustré sur les figures annexées, la cavité 24 comporte un lamage inférieur 26 et un lamage supérieur 28, et permettant de laisser de la place pour le microcircuit. Le lamage inférieur 26 est réalisé plus profondément que le lamage supérieur. Le lamage supérieur forme un gradin 30 délimitant le lamage inférieur 26. Comme illustré sur la figure 1, le lamage inférieur 26 et le lamage supérieur 28 sont chacun délimités en circonférence par un bord supérieur 32, 34 rectangulaire. Le bord supérieur du lamage inférieur correspond à l'intersection du plan de découpe du lamage supérieur et du plan de découpe du lamage inférieur.

Il est aussi connu des cartes dites « duales » qui sont adaptés à communiquer soit avec des lecteurs externes par contact physique avec des broches tel que décrit précédemment ou soit à distance, sans contact physique, au moyen d'une antenne 36. Ces cartes intègrent l'antenne 36 dans son corps 12. Dans ce cas la face interne 14a du module 14 comporte des bornes de connexion 20a, 20b reliés au microcircuit et destinés à être connectés électriquement avec une antenne 36 disposée dans le corps 12 de la carte 10.

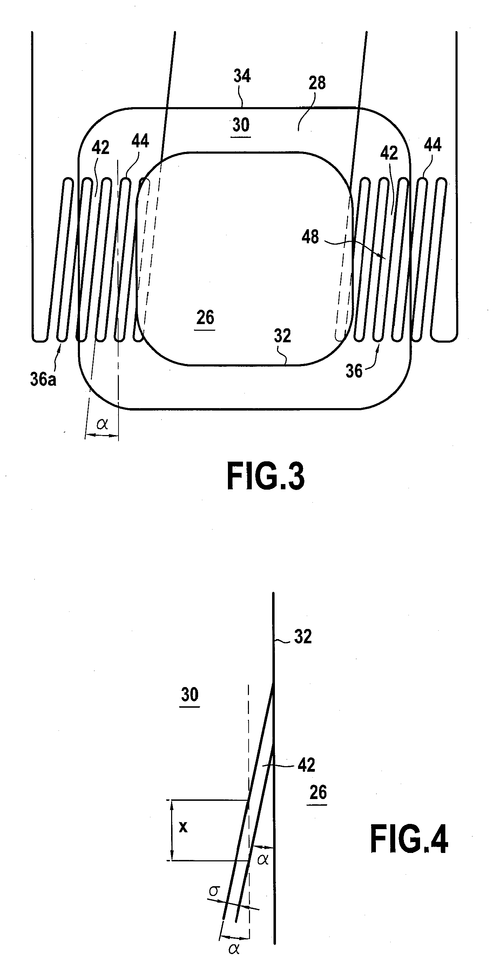

A cet effet un support d'antenne 38 illustré sur la figure 3 forme une couche interne de la carte 10 et est inséré entre les autres couches avant l'opération de laminage. Le support d'antenne 38 est formé d'un substrat 40 en plastique, tel que du PET, du PVC ou du polycarbonate. Un fil formant l'antenne 36 est déroulé et incrusté sur le support d'antenne 38, puis celui-ci est recouvert par les autres couches et ensuite laminée avec ces couches.

L'antenne 36 consiste en un enroulement. Elle comprend au moins une spire 36c et deux extrémités 36a, 36b entre lesquelles s'étend la spire36c. Comme visible sur la figure 3, les extrémités 36a, 36b de l'antenne 36 présentent chacune une forme en zigzag formée d'au moins deux portions rectilignes 42 et deux détours 44 visibles plus en détails sur le figure 3. Les extrémités de l'antenne 36a, 36b s'étendent jusqu'au lamage inférieur 26. De préférence les extrémités de l'antenne (36a, 36b) s'étendent sur au moins la largeur du lamage supérieur (28). Au moins la portion rectiligne débouchant dans le lamage inférieure, autrement dit celle la plus éloignée de la spire 36c, est inclinée par rapport à la paroi sur laquelle elle aboutit.

Le fil d'antenne 36 est incrusté dans l'épaisseur du premier substrat 40 à partir d'une première face de sorte que les portions rectilignes 42 s'étendent sensiblement dans un même plan, De préférence, les portions rectilignes 42 s'étendent dans le plan d'usinage du gradin 30. Ces dispositions assurent que les portions rectilignes 42 sont positionnées à une profondeur constante de manière à garantir une fenêtre d'usinage la plus grande possible. La profondeur du lamage supérieur formant le gradin 30 est alors choisie pour que les extrémités 36a, 36b de l'antenne soient brossées et usinées selon un plan sensiblement parallèle au plan du premier substrat 40 de sorte à rendre accessible au moins une section usinée des portions rectilignes 42 sur le gradin 30. Avantageusement, la section usinée est réalisée dans une épaisseur comprise entre 10% et 40% du diamètre du fil formant l'antenne 36.

Les extrémités 36a, 36b de l'antenne 36 sont donc disposées en face des bornes de connexion 20a, 20b avec lesquelles elles vont être en contact électrique. Sur la variante illustrée en figure 1, les extrémités 36a, 36b de l'antenne 36 sont agencées en regard de part et d'autre du lamage inférieur 26.

Une fois usinées, les deux extrémités 36a, 36b de l'antenne 36 sont destinées à venir en contact avec deux bornes de connexion 20a, 20b dédiées par l'intermédiaire d'un élément de liaison conducteur. Les extrémités 36a, 36b sont donc disposées en face des bornes de connexion 20a, 20b avec lesquelles elles vont être en contact électrique. A cet effet, un film conducteur 46 est déposé sur le gradin 30. Ce film 46 est de préférence un adhésif anisotropique dont les propriétés de conductivités peuvent être modifiées sous l'action d'une pression externe. L'adhésif conducteur anisotrope fournit l'adhérence entre les extrémités 36a, 36b de l'antenne 36 et les bornes de connexion 20a, 20b et génère aussi des interconnections électriques fiables et stables. L'adhésif présente les propriétés énoncées ci-dessus après un temps de liaison par thermocompression court.

Selon l'invention, les deux extrémités 36a, 36b de l'antenne 36 sont agencées chacune sous forme de zig-zag ou de lacet, c'est-à-dire alternant successivement des portions rectilignes 42 et des portions recourbée formant des détours 44. Comme indiqué précédemment, les extrémités 36a, 36b de l'antenne sont noyées dans l'épaisseur du corps de carte 10 à une profondeur correspondant au plan horizontal de découpe formant le fond du lamage supérieur, c'est-à-dire le gradin 30. De plus, la position des extrémités 36a, 36b dans l'épaisseur de la carte 10 prévue pour que les portions rectilignes 42 soient décapées par la fraise d'usinage et ainsi la partie métallique du fil est mise à nue après usinage de la gaine_isolante permettant ainsi d'offrir une zone de contact électrique destinée à venir en contact avec les bornes sur la face interne du module 14.

Selon l'invention, pour chaque extrémité de l'antenne, au moins la portion rectiligne 42 la plus éloignées de la spire 36c est agencée inclinée par rapport au bord supérieur 32 du lamage inférieur 26 sur lequel elle aboutit. Comme visible sur la figure 4, on considère $\alpha$ l'angle d'inclinaison, $\phi$ le diamètre du fil recouvert de gaine et la longueur x de la section découpée. La longueur x de la section découpée dans le plan du gradin 30 suit la relation :

$$x = \frac{\phi}{\sin \alpha}$$

Ces dispositions permettent donc de découper le fil sur une longueur proportionnelle au diamètre du fil initial.

De préférence toutes les portions rectilignes 42 d'une extrémité sont parallèles entre elles et inclinées d'un angle $\alpha$. Les portions rectilignes 42 peuvent être inclinées selon un angle calculé dans le sens indirect ou dans le sens direct par rapport au bord supérieur 32.

Le diamètre du fil $\phi$ étant constant, il en ressort que plus le fil est incliné par rapport au bord supérieur 32, plus petite sera la longueur de la découpe. Ces dispositions limitent ainsi le risque pour le fil d'être délogé du substrat en plastique sur lequel il est incrusté. L'angle d'inclinaison est compris entre 1 et 10° et de préférence sera de 6°.

Il est toutefois avantageux de limiter l'angle d'inclinaison à 10° maximum, de sorte à ne pas découper les portions rectilignes 42 ou les détours 44 proches de la spire 36c d'antenne 36. Une augmentation de l'angle d'inclinaison entraînerait une augmentation du risque de découpe des détours 44 et/ou des portions rectilignes 42 les plus proches de la spire 36c d'antenne 36 et ainsi empêcherait les portions rectilignes 42 lui succédant d'être connectées électriquement. La surface de connexion avec la borne de connexion du module 14 serait alors considérablement réduite.

Les portions rectilignes 42 sont déposées dans le substrat 40 de sorte qu'elles s'alignent sensiblement parallèlement les unes aux autres et sont espacées d'un intervalle minimum. Cet intervalle sera choisi selon le diamètre du fil. De plus les portions rectilignes 42 sont incrustées sensiblement dans le même plan d'incrustation lui-même parallèle à la face externe 12a du substrat 40.

De plus un angle minimum d'inclinaison est calculé en fonction de l'intervalle 48 minimum nécessaire entre deux portions rectilignes 42, cet intervalle 48 variant selon le diamètre du fil. A titre d'exemple un fil de diamètre de 112$\mu$m présente au minimum un intervalle de 300$\mu$m entre chaque portion rectiligne 42 et un fil de diamètre 130$\mu$m présente un intervalle minimum de 400$\mu$m entre chaque portion rectiligne 42. Pour une longueur de portion rectiligne 42 de longueur égale à +/- 5mm, l'angle minimum est obtenu par le calcul suivant : ArcTan(intervalle/longueur)

Pour un diamètre de 112$\mu$m, l'angle minimum d'inclinaison est donc de 1,71° et pour un diamètre de 130$\mu$m l'angle minimum est de 4,57°.

Le support d'antenne 38 est réalisé selon un procédé connu de l'art antérieur et brièvement décrit dans le préambule de la présente description. Le procédé est mis en oeuvre par un outil comportant des moyens pour distribuer le fil d'antenne 36 et l'incruster dans un substrat 40 formant le support d'antenne 38. A cet effet l'outil comporte un moyen de distribution tel qu'une buse adaptée à déverser de façon progressive le fil sur le substrat 40. L'outil comporte aussi des moyens de contrôle pour diriger la buse et contrôler sa vitesse. Les moyens de contrôle peuvent être paramétrés pour contrôler l'angle d'inclinaison, la vitesse de dépose et l'enfoncement du fil. Enfin l'outil peut comporter des moyens de chauffage pour effectuer un chauffage local entraînant une légère fusion de plastique et / ou de la gaine du fil. Le support d'antenne 38 comporte un substrat 40 s'étendant selon une direction longitudinale et une direction transversale, et comportant une antenne 36 comportant au moins une spire 36c, l'antenne 36 présentant des extrémités 36a, 36b agencées en forme de zigzag et formées d'au moins deux portions rectilignes 42 qui sont reliées entre elles par un détour 44 et dont au moins la portion rectiligne 42 la plus éloignée de la spire 36c est inclinée par rapport à la direction transversale.

L'invention concerne aussi un procédé de fabrication d'un document électronique selon la revendication 9, tel qu'une carte 10 de format bancaire ou une carte d'identité dont les dimensions sont spécifiées dans les normes ISO 7816. Le procédé de fabrication consiste à former un support d'antenne 38 dont les extrémités 36a, 36b présentent des portions rectilignes 42 agencées inclinées par rapport au bord supérieur 32. Le procédé comporte une étape dépose d'un fil sur un premier substrat 40 de sorte à former au moins une spire 36c d'antenne et deux extrémités 36a, 36b agencées en forme zigzag et formées chacune d'au moins deux portions rectilignes 42 reliées entre elles par un détour, pour chacune des extrémités 36a, 36b, au moins la portion rectiligne 42 destinée à aboutir dans le lamage inférieur est déposée inclinée par rapport au bord supérieur 32. Puis le procédé consiste à intégrer le support d'antenne 38 décrit précédemment dans un corps 12 de carte 10. Le procédé comporte une étape d'assemblage d'au moins un deuxième substrat avec le premier substrat 40. A cet effet, le support d'antenne 38 est assemblé avec d'autres couches en plastique, telles que du PET, du PVC ou du polycarbonate par un procédé de lamination à chaud permettant de faire adhérer les différentes couches entre elles. Le corps 12 de carte 10 obtenu est ensuite usiné de sorte à former une cavité 24 débouchante sur la face avant 12a du corps 12 de carte 10. La profondeur d'usinage est déterminée selon la position des extrémités 36a, 36b de l'antenne 36 dans l'épaisseur du corps 12 de carte 10. Tout particulièrement la profondeur de la cavité 24 est déterminée de sorte que les portions rectilignes 42 des extrémités 36a, 36b de l'antenne soient usinées partiellement. Une section usinée 31 des portions rectilignes 42 est alors accessible et est destinée à être connectée électriquement aux bornes de contact du module 14. Puis le procédé comporte une étape de dépose d'un moyen de connexion électrique et une étape de mise en place du module 14 à microcircuit dans la cavité 24 et une étape de connexion électrique entre le module 14 et les extrémités 36a, 36b de l'antenne.

## Revendications

1. Document électronique comportant :

   - un corps (12) comprenant une cavité (24) ouverte sur une des faces du corps (12) et délimitée par des parois,
   - le corps (12) comportant en outre une antenne (36) comportant au moins une spire (36c) s'étendant entre deux extrémités (36a, 36b) qui débouchent sur une paroi de la cavité (24),
   - un module (14) comportant un microprocesseur (16) et au moins deux bornes de connexion (20a, 20b) dédiées à l'antenne (36) et reliées électroniquement d'une part au microprocesseur (16) et d'autre part aux extrémités (36a, 36b) de l'antenne 36 par des moyens de connexion électrique,
   - la cavité (24) présentant un lamage inférieur (26) délimité par un bord supérieur (32) et un lamage supérieur (28) formant un gradin (30) bordant le lamage inférieur (26),
   - **caractérisé en ce que** les extrémités (36a, 36b) de l'antenne s'étendent sensiblement dans le plan du gradin,
- et **en ce que** les extrémités (36a, 36b) de l'antenne sont agencées en forme de zigzag et **en ce qu'**elles sont formées d'au moins deux portions rectilignes (42) qui sont reliées entre elles par un détour (44) et dont la portion rectiligne (42) aboutissant dans le lamage inférieur est inclinée par rapport au bord supérieur (32) du lamage inférieur (26).

2. Document électronique selon la revendication précédente, dans lequel les portions rectilignes (42) d'une extrémité sont agencées sensiblement parallèles entre elles dans un même plan incliné par rapport à la paroi.

3. Document électronique selon l'une des revendications précédentes, dans lequel le module (14) comporte une plaque à circuit imprimé qui présente une face interne (14a) sur laquelle est montée le microprocesseur (16), et une face externe (14b) qui comporte des surfaces de contact métallisées (18) connectées électriquement au microcircuit et qui sont destinés à venir en contact avec des broches d'un lecteur externe.

4. Document électronique selon l'une des revendications précédentes, dans lequel les détours (44) sont incrustés plus profondément que les portions rectilignes (42) dans l'épaisseur du corps (12).

5. Document électronique selon l'une des revendications précédentes dans lequel les extrémités de l'antenne (36a, 36b) s'étendent sur une largeur au moins égale à celle du lamage supérieur (28).

6. Document électronique selon la revendication précédente, dans lequel les extrémités (36a, 36b) de l'antenne sont agencées en regard l'une de l'autre de part et d'autre du lamage inférieur (26).

7. Document électronique selon l'une des revendications précédentes, dans lequel l'inclinaison de ladite au moins une portion rectiligne (42) est de 1 à 10°, de préférence 6° par rapport à au bord supérieur (32) dans le plan du gradin (30).

8. Document électronique selon l'une des revendications précédentes, comportant un adhésif anisotropique conducteur qui est déposé sur le gradin (30) bordant le lamage inférieur (26).

9. Procédé de fabrication d'un document électronique selon l'une des revendications 5 à 8, comportant les étapes suivantes :

   a) dépose d'un fil sur un premier substrat (40) de sorte à former au moins une spire (36c) d'antenne et deux extrémités (36a, 36b) agencées en forme zigzag et formées chacune d'au moins deux portions rectilignes (42) reliées entre elles par un détour,
   b) assemblage d'au moins un deuxième substrat avec le premier substrat (40),
   c) usinage d'une cavité (24) débouchante comportant un lamage inférieur (26) délimité par un bord supérieure (32) et un lamage supérieur (28) formant un gradin (30) bordant le lamage inférieur,
   d) dépose d'un moyen de connexion électrique,
   e) mise en place du module (14) à microcircuit dans la cavité (24) et connexion électrique entre le module (14) et les extrémités (36a, 36b) de l'antenne,

   **caractérisé en ce qu'**à l'étape a) pour chacune des extrémités (36a, 36b), au moins la portion rectiligne (42) destinée à aboutir dans le lamage inférieur est déposée inclinée par rapport au bord supérieur (32).

**Patentansprüche**

1. Elektronisches Dokument aufweisend:

   - einen Körper (12), der einen Hohlraum (24) umfasst, der auf einer der Seiten des Körpers (12) offen ist und von Wänden begrenzt ist,
   - wobei der Körper (12) ferner eine Antenne (36) aufweist, die wenigstens eine Windung (36c) aufweist, die sich zwischen zwei Enden (36a, 36b) erstreckt, die an einer Wand des Hohlraums (24) münden,
   - ein Modul (14) mit einem Mikroprozessor (16) und wenigstens zwei Anschlussklemmen (20a, 20b), die für die Antenne (36) dediziert und durch elektrische Anschlussmittel elektronisch einerseits mit dem Mikroprozessor (16) und andererseits mit den Enden (36a, 36b) der Antenne 36 verbunden sind,
   - wobei der Hohlraum (24) eine untere Senkung (26), die von einem oberen Rand (32) begrenzt ist, und eine obere Senkung (28) aufweist, die eine Stufe (30) bildet, die die untere Senkung (26) umrandet,
   - **dadurch gekennzeichnet, dass** sich die Enden (36a, 36b) der Antenne im Wesentlichen in der Ebene der Stufe erstrecken,
   - und dadurch, dass die Enden (36a, 36b) der Antenne zickzackförmig angeordnet sind, und dadurch, dass sie von wenigstens zwei geradlinigen Teilstücken (42) gebildet sind, die durch eine Biegung (44) verbunden sind und deren geradliniges Teilstück (42), das in der unteren Senkung endet, im Verhältnis zum oberen Rand (32) der unteren Senkung (26) geneigt ist.

**2.** Elektronisches Dokument nach dem vorhergehenden Anspruch, wobei die geradlinigen Teilstücke (42) eines Endes im Wesentlichen parallel zueinander in ein und derselben Ebene angeordnet sind, die im Verhältnis zur Wand geneigt ist.

**3.** Elektronisches Dokument nach einem der vorhergehenden Ansprüche, wobei das Modul (14) eine Leiterplatte aufweist, die eine Innenseite (14a), auf der der Mikroprozessor (16) angebracht ist, und eine Außenseite (14b) aufweist, die metallisierte Kontaktflächen (18) aufweist, die mit dem Mikroschaltkreis elektrisch verbunden sind und die dazu bestimmt sind, mit Pins eines externen Lesegeräts verbunden zu sein.

**4.** Elektronisches Dokument nach einem der vorhergehenden Ansprüche, wobei die Biegungen (44) tiefer als die geradlinigen Teilstücke (42) in die Dicke des Körpers (12) eingebracht sind.

**5.** Elektronisches Dokument nach einem der vorhergehenden Ansprüche, wobei sich die Enden der Antenne (36a, 36b) über eine Breite erstrecken, die wenigstens gleich jener der oberen Senkung (28) ist.

**6.** Elektronisches Dokument nach dem vorhergehenden Anspruch, wobei die Enden (36a, 36b) der Antenne einander gegenüber beiderseits der unteren Senkung (26) angeordnet sind.

**7.** Elektronisches Dokument nach einem der vorhergehenden Ansprüche, wobei die Neigung des wenigstens einen geradlinigen Teilstücks (42) von 1 bis 10°, vorzugsweise 6° zum oberen Rand (32) in der Ebene der Stufe (30) beträgt.

**8.** Elektronisches Dokument nach einem der vorhergehenden Ansprüche, aufweisend ein anisotropes leitendes Haftmittel, das auf der Stufe (30) aufgebracht ist, die die untere Senkung (26) umrandet.

**9.** Verfahren zur Herstellung eines elektronischen Dokuments nach einem der Ansprüche 5 bis 8, aufweisend die folgenden Schritte:

a) Aufbringen eines Drahts auf einem ersten Substrat (40) zur Bildung wenigstens einer Antennenwindung (36c) und zweier Enden (36a, 36b), die zickzackförmig angeordnet und jeweils von wenigstens zwei geradlinigen Teilstücken (42) gebildet sind, die durch eine Biegung miteinander verbunden sind,
b) Zusammensetzen wenigstens eines zweiten Substrats mit dem ersten Substrat (40),
c) Ausbilden eines durchgehenden Hohlraums (24), der eine untere Senkung (26), die von einem oberen Rand (32) begrenzt ist, und eine obere Senkung (28) aufweist, die eine Stufe (30) bildet, die die untere Senkung umrandet,
d) Aufbringen eines elektrischen Verbindungsmittels,
e) Einsetzen des Mikroschaltkreismoduls (14) in den Hohlraum (24) und Herstellen der elektrischen Verbindung zwischen dem Modul (14) und den Enden (36a, 36b) der Antenne,

**dadurch gekennzeichnet, dass** bei Schritt a) für jedes der Enden (36a, 36b) wenigstens das geradlinige Teilstück (42), das dazu bestimmt ist, in der unteren Senkung zu enden, im Verhältnis zum oberen Rand (32) geneigt aufgebracht wird.

**Claims**

**1.** Electronic document comprising:

- a body (12) comprising a cavity (24) open on one of the faces of the body (12) and delimited by walls,
- the body (12) further comprising an antenna (36) comprising at least one turn (36c) extending between two ends (36a, 36b) which emerge on a wall of the cavity (24),
- a module (14) comprising a microprocessor (16) and at least two connection terminals (20a, 20b) dedicated to the antenna (36) and linked electronically on the one hand to the microprocessor (16) and on the other hand to the ends (36a, 36b) of the antenna 36 by electrical connection means,
- the cavity (24) having a lower countersink (26) delimited by a top edge (32) and an upper countersink (28) forming a step (30) bordering the lower countersink (26),
- **characterized in that** the ends (36a, 36b) of the antenna extend substantially in the plane of the step,
- and **in that** the ends (36a, 36b) of the antenna are arranged in zigzag form and **in that** they are formed by at least two rectilinear portions (42) which are linked to one another by a deviation (44) and of which the rectilinear portion (42) culminating in the lower countersink is inclined with respect to the top edge (32) of the lower countersink (26).

**2.** Electronic document according to the preceding claim, wherein the rectilinear portions (42) of an end are arranged substantially parallel to one another in one and the same plane that is inclined with respect to the wall.

**3.** Electronic document according to one of the preceding claims, wherein the module (14) comprises a printed circuit board which has an inner face (14a) on which the microprocessor (16) is mounted, and an outer face (14b) which comprises metallized contact surfaces (18) connected electrically to the microcircuit and which are intended to come into contact with leads of an external reader.

**4.** Electronic document according to one of the preceding claims, wherein the deviations (44) are embedded more deeply than the rectilinear portions (42) in the thickness of the body (12).

**5.** Electronic document according to one of the preceding claims, wherein the ends of the antenna (36a, 36b) extend over a width at least equal to that of the upper countersink (28).

**6.** Electronic document according to the preceding claim, wherein the ends (36a, 36b) of the antenna are arranged facing one another on either side of the lower countersink (26).

**7.** Electronic document according to one of the preceding claims, wherein the inclination of said at least one rectilinear portion (42) is from 1 to 10°, preferably 6° with respect to the top edge (32) in the plane of the step (30).

**8.** Electronic document according to one of the preceding claims, comprising a conductive anisotropic adhesive which is deposited on the step (30) bordering the lower countersink (26).

**9.** Method for fabricating an electronic document according to one of Claims 5 to 8, comprising the following steps:

a) deposition of a wire on a first substrate (40) so as to form at least one antenna turn (36c) and two ends (36a, 36b) arranged in zigzag form and each formed by at least two rectilinear portions (42) linked to one another by a deviation,
b) assembly of at least one second substrate with the first substrate (40),
c) machining of an open cavity (24) comprising a lower countersink (26) delimited by a top edge (32) and an upper countersink (28) forming a step (30) bordering the lower countersink,
d) deposition of an electrical connection means,
e) placement of the microcircuit module (14) in the cavity (24) and electrical connection between the module (14) and the ends (36a, 36b) of the antenna,

**characterized in that**, in the step a) for each of the ends (36a, 36b), at least the rectilinear portion (42) intended to culminate in the lower countersink is deposited inclined with respect to the top edge (32).

FIG.1

FIG.2

**FIG.3**

**FIG.4**

**RÉFÉRENCES CITÉES DANS LA DESCRIPTION**

**Documents brevets cités dans la description**

- US 6233818 B
- EP 0880754 A
- EP 2775426 A1
- DE 102012221546
- FR 2769390
- EP 2711873 A